# EUROPEAN PATENT SPECIFICATION

(11) **EP 3 703 030 B1**
(45) Date of publication and mention of the grant of the patent: **09.04.2025**
(21) Application number: 20159918.0
(22) Date of filing: 27.02.2020
(51) Int. Cl.: G08G 1/0968, G08G 1/0969, G01C 21/34, G08G 1/16

(54) **SERVER AND VEHICLE ASSISTANCE SYSTEM**
SERVER UND FAHRZEUGASSISTENZSYSTEM
SERVEUR ET SYSTÈME D'ASSISTANCE DE VÉHICULE

(30) Priority: 28.02.2019 JP 2019036566
(43) Date of publication of application: 02.09.2020
(73) Proprietor: Hitachi, Ltd., Tokyo 100-8280 (JP)
(72) Inventor: KONDO, Akihiro, Tokyo, 100-8280 (JP); MATSUMOTO, Takashi, Tokyo, 100-8280 (JP); HYODO, Akihiko, Tokyo, 100-8280 (JP); SOBUE, Tsuneo, Tokyo, 100-8280 (JP)
(74) Representative: MERH-IP Matias Erny Reichl Hoffmann Patentanwälte PartG mbB

(56) References cited:
- EP-A2- 2 669 633
- WO-A1-2017/136283
- US-A1- 2011 125 344
- US-A1- 2011 130 894
- US-A1- 2013 338 877

## Description

### BACKGROUND OF THE INVENTION

### 1. Field of the Invention

The present invention relates to a server and a vehicle assistance system.

### 2. Description of the Related Art

Conventionally, a technique has been proposed in which safety assistance, such as avoidance of collision with an obstacle, is provided to a vehicle with information acquired from sensors provided outside the vehicle in addition to sensors installed in the vehicle. For example, JP 2018-514016 A discloses a vehicle assistance system that identifies, using communication circuitry, at least one external camera located remotely away from and within a predefined perimeter surrounding a first vehicle, acquires, using the communication circuitry, an image feed produced by the at least one external camera, determines at least one present or upcoming vehicle scenario for the first vehicle based on vehicle information extracted from an internal source of the first vehicle, and operates the first vehicle based on the image feed. Further relevant prior art is described in WO 2017/136283 A1, US 2013/338877 A1, US 2011/130894 A1 and US 2011/125344 A1.

### SUMMARY OF THE INVENTION

In the technique of JP 2018-514016 A, safety assistance for a vehicle is implemented by notifying the driver of the vehicle of the presence of an obstacle in an area not visually recognizable by the driver, by using the image feed from the external camera located within the perimeter of the vehicle. However, the influence of an obstacle on a road on a vehicle is not necessarily the same among vehicles, and differs among vehicles due to a difference among the vehicles in width and the like. The technique disclosed in JP 2018-514016 A cannot provide an appropriate assistance taking the presence or absence of such influence of an obstacle on each vehicle into consideration.

For solving the aforementioned problem it is provided a server having the features defined in claim 1. Further it is provided a vehicle assistance system having the features defined in claim 4. Further preferred embodiments are defined in the dependent claims

According to this invention, when an obstacle exists on a road, appropriate assistance can be provided to a vehicle affected by the obstacle.

### BRIEF DESCRIPTION OF THE DRAWINGS

Fig. 1 is a diagram illustrating a configuration of a vehicle assistance system according to a first arrangement without inter-vehicle communication unit as claimed; this first arrangement shown in Fig. 1 is helpful for understanding the present invention.
Fig. 2 is a sequence diagram illustrating autonomous movement assistance control;
Fig. 3 is a diagram illustrating passing ability determination processing;
Fig. 4 is a diagram illustrating an example of a management screen;
Fig. 5 is a diagram illustrating another example of the management screen; and
Fig. 6 is a diagram illustrating a configuration of a vehicle assistance system according to a second arrangement. The second arrangement is an embodiment of the present invention.

### DESCRIPTION OF THE PREFERRED ARRANGEMENTS

### First arrangement without inter-vehicle communication unit as claimed

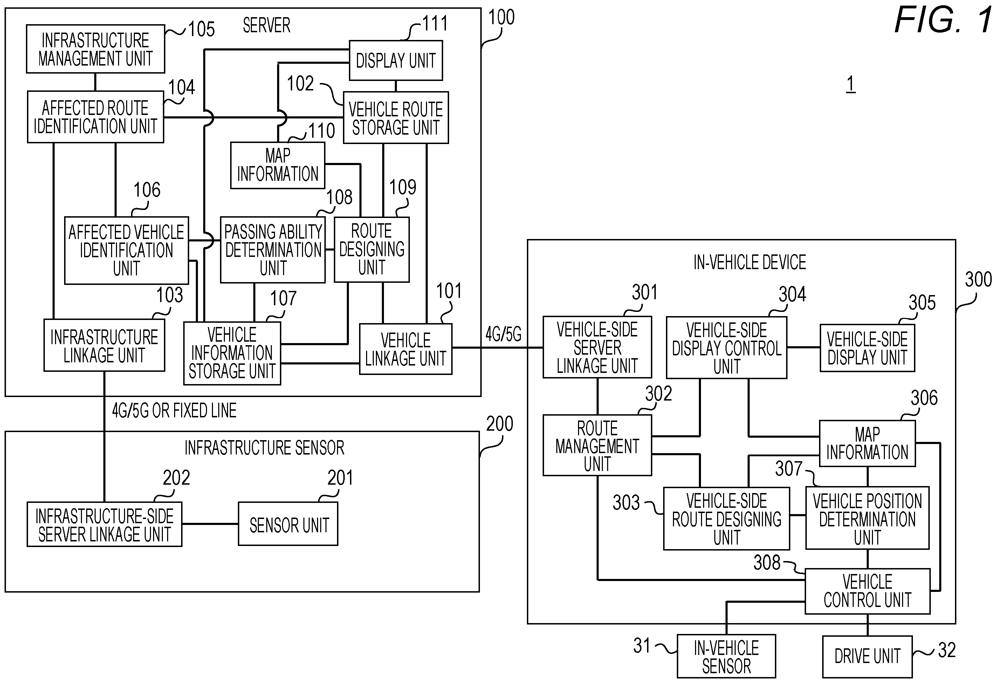

Fig. 1 is a diagram illustrating a configuration of a vehicle assistance system according to a first arrangement . The vehicle assistance system 1 illustrated in Fig. 1 includes a server 100, an infrastructure sensor 200, and an in-vehicle device 300, and assists a vehicle in which the in-vehicle device 300 is installed when the vehicle autonomously moves, by autonomous driving, on a traveling route to a designated location. Hereinafter, a vehicle to be controlled by the vehicle assistance system 1, that is, a vehicle in which the in-vehicle device 300 is installed will be referred to as "host vehicle".

The server 100 is an information apparatus that manages and assists the host vehicle, and is installed in a predetermined facility such as an information center, for example. The server 100 includes functional blocks of a vehicle linkage unit 101, a vehicle route storage unit 102, an infrastructure linkage unit 103, an affected route identification unit 104, an infrastructure management unit 105, an affected vehicle identification unit 106, a vehicle information storage unit 107, a passing ability determination unit 108, a route designing unit 109, map information 110, and a display unit 111. The server 100 has unillustrated hardware configurations including a central processing unit (CPU), memory, and storage (such as a hard disk drive (HDD) or a solid state drive (SSD)), and can implement the functional blocks described above by executing a predetermined program by using such hardware.

The infrastructure sensor 200 is installed in the vicinity of a road traveled by the host vehicle, and detects an obstacle existing in the periphery of the road, while being outside the host vehicle. Only a single infrastructure sensor 200 is illustrated in Fig. 1, but a plurality of infrastructure sensors 200 may be installed in the vicinity of the road. The infrastructure sensor 200 includes functional blocks of a sensor unit 201 and an infrastructure-side server linkage unit 202.

The in-vehicle device 300 is installed in the host vehicle, and performs control necessary for autonomously moving the host vehicle on a traveling route to a designated location. Only one in-vehicle device 300 is illustrated in Fig. 1, but a plurality of vehicles each have the in-vehicle device 300, and the in-vehicle devices 300 may form the vehicle assistance system 1 together with the server 100 and the infrastructure sensor 200. The in-vehicle device 300 includes functional blocks of a vehicle-side server linkage unit 301, a route management unit 302, a vehicle-side route designing unit 303, a vehicle-side display control unit 304, a vehicle-side display unit 305, map information 306, a vehicle position determination unit 307, and a vehicle control unit 308.

Next, each functional block of the server 100, the infrastructure sensor 200, and the in-vehicle device 300 will be described below.

In the server 100, the vehicle linkage unit 101 has a function of communicating with the in-vehicle device 300, receives position information and route information about the host vehicle transmitted from the in-vehicle device 300, and transmits information about a detour route determined by the route designing unit 109 to the in-vehicle device 300. The vehicle linkage unit 101 can communicate with the in-vehicle device 300 using, for example, a mobile communication network (such as 4G or 5G).

The vehicle route storage unit 102 stores and manages the route information received by the vehicle linkage unit 101 from the in-vehicle device 300 for each vehicle. Note that the route of the traveling route of each vehicle may be designed on the server 100 side using the route designing unit 109, instead of being designed on the in-vehicle device 300 side. In such a case, the vehicle route storage unit 102 stores and manages the route information about the traveling route of each vehicle designed by the route designing unit 109 for each vehicle. The vehicle route storage unit 102 manages the traveling route of each vehicle, for example, by storing and holding the route information about each vehicle in combination with a unique vehicle ID set to each vehicle in advance. As will be described later, when a detour route is set by the route designing unit 109, the contents of the route information stored in the vehicle route storage unit 102 are updated according to the detour route.

The infrastructure linkage unit 103 has a function of communicating with the infrastructure sensor 200, and receives information transmitted from the infrastructure sensor 200 and transmits information to the infrastructure sensor 200. The infrastructure linkage unit 103 can communicate with the infrastructure sensor 200 using, for example, a mobile communication network (such as 4G or 5G) or a fixed line.

When an obstacle is detected in sensing information received and acquired from any of the infrastructure sensors 200 by the infrastructure linkage unit 103, the affected route identification unit 104 identifies an affected route as a traveling route on which the vehicle is affected by the obstacle, based on the position of each infrastructure sensor 200 stored and managed by the infrastructure management unit 105. In this process, the affected route identification unit 104 acquires, from the infrastructure management unit 105, the position of the infrastructure sensor 200 that has transmitted the sensing information including the obstacle information to the server 100, for example. Then, the position of the obstacle is identified based on the position of the infrastructure sensor 200 and the sensing information, and the road on which the obstacle exists is identified. Once the road on which the obstacle exists is thus identified, a traveling route including the road on which the obstacle exists, among the traveling routes of the vehicles stored and managed by the vehicle route storage unit 102, is identified as the affected route on which the vehicle is affected by the obstacle. The infrastructure management unit 105 may manage a link ID of a road corresponding to a sensing range of each infrastructure sensor 200, instead of the position of each infrastructure sensor 200. In this case, the road on which an obstacle exists can be identified with the affected route identification unit 104 acquiring, from the infrastructure management unit 105, the link ID corresponding to the infrastructure sensor 200 that has transmitted the sensing information including the obstacle information to the server 100

Based on the affected route identified by the affected route identification unit 104, the affected vehicle identification unit 106 identifies as an affected vehicle, a vehicle to be affected by an obstacle among a plurality of vehicles including the in-vehicle device 300. In this process, the affected vehicle identification unit 106 selects as the affected vehicle, for example, a vehicle traveling toward the obstacle from among the vehicles corresponding to the affected route, based on the position information about each vehicle stored in the vehicle information storage unit 107.

The vehicle information storage unit 107 stores and manages the position information received from the in-vehicle device 300 by the vehicle linkage unit 101 for each vehicle, and also stores vehicle information related to the characteristics of each vehicle. Each vehicle information includes, for example, information about the width and the height of the vehicle. As in the case of the vehicle route storage unit 102 described above, the vehicle information storage unit 107 preferably manages the information about each vehicle, for example, by storing and holding the position information and the vehicle information about each vehicle in combination with a unique vehicle ID set to each vehicle in advance. With this configuration, the traveling route of each vehicle can easily be associated with the position and characteristics of the vehicle, using the vehicle ID.

The passing ability determination unit 108 determines whether the affected vehicle, identified by the affected vehicle identification unit 106, can pass by the obstacle. In this process, for example, the passing ability determination unit 108 determines whether the affected vehicle can pass by the obstacle, based on the information about the vehicle width of the affected vehicle stored in the vehicle information storage unit 107 as the vehicle information and about a passable width of the road through which the vehicle passes at an obstacle point where the obstacle exists. Details of this determination method will be described later.

The route designing unit 109 designs a detour route for the affected vehicle to travel while avoiding the obstacle point using the map information 110 when the passing ability determination unit 108 determines that the affected vehicle is unable to pass by the obstacle. For example, the detour route is designed by acquiring the current position of the affected vehicle by reading the latest position information about the affected vehicle from the vehicle information storage unit 107, and searching for a route through which the vehicle reaches the destination from the acquired current position without passing through the obstacle point. When there is no available detour road between the current position of the affected vehicle and the obstacle point, a detour route involving returning to a point where a road on which the obstacle point can be avoided can be accessed may be searched. When a plurality of detour routes can be designed, a detour route is designed with a higher priority given to a road provided with more infrastructure sensors 200. The information about the detour route designed by the route designing unit 109 is transmitted by the vehicle linkage unit 101 to the in-vehicle device 300 installed in the affected vehicle.

The map information 110 is information representing a map of an area where the host vehicle moves autonomously, and is stored in a storage such as an HDD or an SSD in the server 100. The map information 110 includes, for example, road map information about various parts of the country, information about a map in a parking lot, and the like. It should be noted that the map information 110 used preferably features higher accuracy than general map information used in a conventional navigation device or the like, so that a route on which the host vehicle can move autonomously can be appropriately set based on the map information 110.

The display unit 111 uses the route information about each vehicle stored in the vehicle route storage unit 102, the position information about each vehicle stored in the vehicle information storage unit 107, the map information 110, and the like to display a screen to an administrator of the server 100. Note that the display unit 111 may not necessarily be a component of the server 100, and may be provided outside the server 100. The display unit 111 includes, for example, a liquid crystal display, and can display and provide various screens necessary for the administrator of the server 100 to manage the operations of the vehicle assistance system 1. For example, when an obstacle is detected by any of the infrastructure sensors 200 and a detour route for avoiding the obstacle is set, such information can be displayed on the screen to be checked by the administrator. An example of such a screen will be described later.

The sensor unit 201 of the infrastructure sensor 200 includes various sensors such as a camera, a radar, and Light Detection and Ranging (LiDAR). The sensor unit 201 generates sensing information within a predetermined sensing range corresponding to these sensors based on the position where the infrastructure sensor 200 is installed. When the sensor unit 201 detects an obstacle existing within the sensing range, the sensing information includes information about the obstacle.

The infrastructure-side server linkage unit 202 has a function of communicating with the server 100, and transmits the sensing information generated by the sensor unit 201 to the server 100. The infrastructure-side server linkage unit 202 can communicate with the infrastructure linkage unit 103 of the server 100, by using, for example, a mobile communication network (such as 4G or 5G) or a fixed line.

In the in-vehicle device 300, the vehicle-side server linkage unit 301 has a function of communicating with the server 100, and transmits the position information and the route information about the host vehicle to the server 100, and receives information about the detour route transmitted from the server 100. The vehicle-side server linkage unit 301 can communicate with the vehicle linkage unit 101 of the server 100, by using, for example, a mobile communication network (such as 4G or 5G).

The route management unit 302 manages the current traveling route of the host vehicle. As described above, when the route designing unit 109 designs a detour route in the server 100, and information about the detour route is transmitted from the server 100 and received by the vehicle-side server linkage unit 301, the route management unit 302 discards the current traveling route, and sets the detour route to be the new traveling route of the host vehicle based on the received information.

The vehicle-side route designing unit 303 designs the traveling route on which the host vehicle autonomously travels from the current position to the set destination, based on the map information 306 and the current position of the host vehicle determined by the vehicle position determination unit 307. The traveling route of the host vehicle designed by the vehicle-side route designing unit 303 is stored and managed in the route management unit 302. When the traveling route of each vehicle is designed in the server 100 as described above, the in-vehicle device 300 may not include the vehicle-side route designing unit 303.

The vehicle-side display control unit 304 generates a screen displayed by the vehicle-side display unit 305, based on the map information 306 and the traveling route of the host vehicle managed by the route management unit 302. The vehicle-side display unit 305 includes, for example, a liquid crystal display, and displays a screen generated by the vehicle-side display control unit 304 to issue a notification to an occupant of the host vehicle. As a result, for example, the vehicle-side display unit 305 displays a screen showing the position and traveling route of the host vehicle on a map, or a screen for notifying an occupant of the host vehicle of a detour route when the detour route for avoiding an obstacle is set. Note that a notification to the occupant may be issued with sound output from a speaker (not illustrated) in addition to/instead of the screen of the vehicle-side display unit 305.

As in the case of the map information 110 of the server 100, the map information 306 is information representing a map of an area where the host vehicle autonomously moves, and is stored in an unillustrated storage such as an HDD or an SSD in the in-vehicle device 300. The map information 306 is used, for example, by the vehicle-side route designing unit 303 for designing the traveling route of the host vehicle, by the vehicle-side display control unit 304 for generating a map screen, and the like. Note that the map information 306 used preferably features higher accuracy than conventional general map information, as in the case of the map information 110 of the server 100.

The vehicle position determination unit 307 determines the position of the host vehicle based on a GPS signal received by a GPS sensor (not illustrated) and information (such as speed, acceleration, and steering amount) about a moving status of the host vehicle detected by the in-vehicle sensor 31. Note that the map information 306 may be used to perform known map matching processing so that the position of the host vehicle is set to be on a road. The position information about the host vehicle determined by the vehicle position determination unit 307 is transmitted to the server 100 by the vehicle-side server linkage unit 301 and used by the vehicle information storage unit 107 for managing the position of the host vehicle.

The vehicle control unit 308 performs control required for causing autonomous movement of the host vehicle along the current traveling route, based on that map information 306 the current position of the host vehicle determined by the vehicle position determination unit 307 and the traveling route of the host vehicle managed by the route management unit 302. For example, the vehicle control unit 308 determines the speed, acceleration, and steering amount of the host vehicle based on the length and curvature of the traveling route, and controls a drive unit 32 to perform accelerator operation, brake operation, steering wheel operation, and the like of the host vehicle, so that the host vehicle can travel along the traveling route. In this process, for example, information about the periphery of the host vehicle acquired from the in-vehicle sensor 31 may further be used, to determine to perform emergency braking when an obstacle is detected in front of the host vehicle.

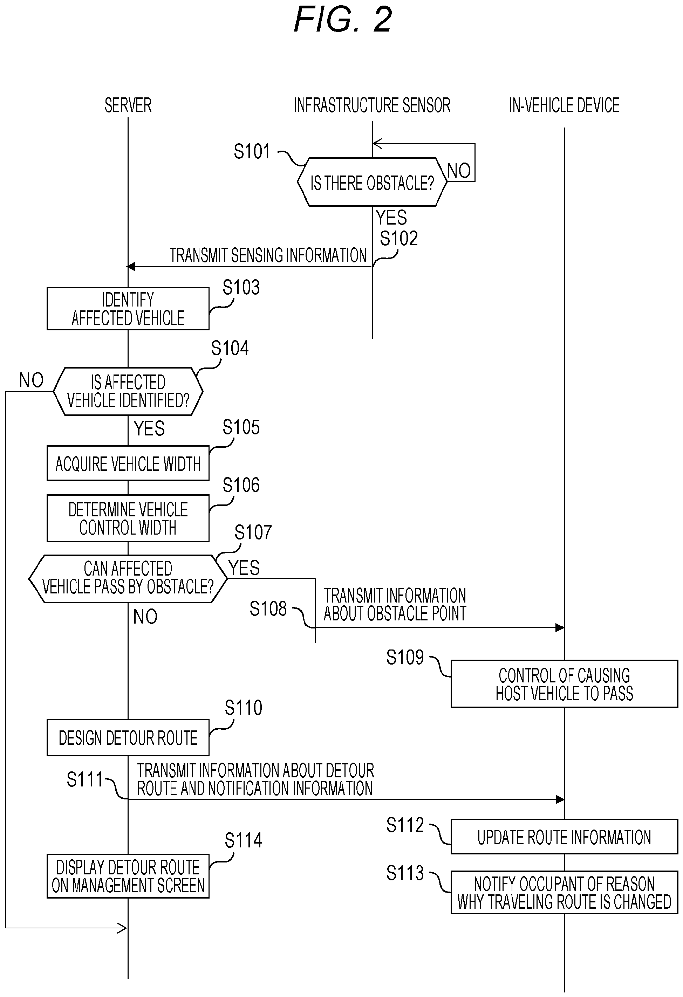

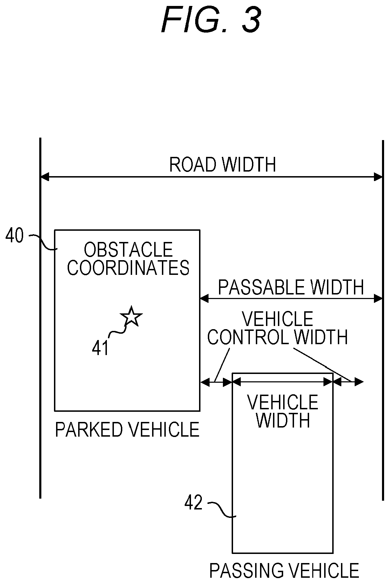

Next, a specific example of autonomous movement assistance performed by the vehicle assistance system 1 according to the present arrangement will be described with reference to Figs. 2 and 3.

Fig. 2 is a sequence diagram illustrating autonomous movement assistance control performed by the vehicle assistance system 1.

In step S101, the infrastructure sensor 200 determines whether there is an obstacle in the sensing range based on the sensing information generated by the sensor unit 201. When there is no obstacle, that is, when no obstacle is detected by the sensor unit 201, the processing stays at step S101. When there is an obstacle, that is, when an obstacle is detected by the sensor unit 201, the processing proceeds to step S102.

In step S102, the infrastructure-side server linkage unit 202 of the infrastructure sensor 200 transmits the sensing information generated by the sensor unit 201 to the server 100. The server 100 receives the sensing information transmitted from the infrastructure sensor 200 through the infrastructure linkage unit 103.

In steps S101 and S102 described above, the infrastructure sensor 200 determines whether there is an obstacle and the infrastructure sensor 200 transmits the sensing information to the server 100 when it is determined that there is an obstacle. Alternatively, the server 100 may determine whether there is an obstacle. In such a case, the infrastructure sensor 200 may transmit sensing information to the server 100 at a predetermined interval, and the server 100 that has received the sensing information may determine whether there is an obstacle based on the sensing information. As a result, when it is determined that there is an obstacle, the server 100 executes processing from step S103 described below.

In step S103, the affected route identification unit 104 and the affected vehicle identification unit 106 of the server 100 identify the affected vehicle affected by the obstacle included in the sensing information received in step S102. In this process, as described above, first of all, the affected route identification unit 104 identifies the position of the obstacle and identifies the affected route on which the vehicle is affected by the obstacle. Then, the affected vehicle identification unit 106 identifies an affected vehicle that corresponds to the identified affected route and is traveling toward the obstacle.

In step S104, the server 100 determines whether an affected vehicle is identified in step S103. When at least one affected vehicle is identified for the obstacle, the processing proceeds to step S105. When no vehicle is identified, the sequence in Fig. 2 is terminated.

In step S105, the passing ability determination unit 108 of the server 100 acquires the vehicle width of each affected vehicle identified in step S103. In this process, for example, the passing ability determination unit 108 acquires feature information of each affected vehicle from the vehicle information storage unit 107, and acquires the vehicle width of each affected vehicle based on the vehicle width information included in the feature information.

In step S106, the passing ability determination unit 108 of the server 100, determines a vehicle control width of each affected vehicle identified in step S103. The vehicle control width is the minimum distance that needs to be secured between the left and right side surfaces of the vehicle and walls and obstacles for the autonomous driving control of the vehicle. This width varies depending on the control accuracy of the vehicle, the control interval, and the like. In this process, for example, the passing ability determination unit 108 acquires vehicle information of each affected vehicle from the vehicle information storage unit 107, and determines the vehicle control width of each affected vehicle based on the vehicle width information included in the vehicle information. Alternatively, a preset value may be used as the vehicle control width of each affected vehicle. Other suitable methods may be used for determining the vehicle control width of each affected vehicle.

In step S107, the passing ability determination unit 108 of the server 100 determines whether each affected vehicle can pass by the obstacle based on the vehicle width acquired in step S105 and the vehicle control width determined in step S106. In this process, the passing ability determination unit 108 performs the determination in step S107 as follows, for example.

Fig. 3 is a diagram illustrating passing ability determination processing executed by the passing ability determination unit 108. Fig. 3 illustrates a state where, for example, a passing vehicle 42 is about to pass by a parked vehicle 40 existing as an obstacle at obstacle coordinates 41 on the road. In this case, in the server 100, the passing vehicle 42 is identified as an affected vehicle that is affected by the parked vehicle 40, and the passing ability determination unit 108 executes the passing ability determination processing in step S107 of Fig. 2. In this processing, first of all, the passing ability determination unit 108 calculates a value obtained by adding the vehicle control width to both left and right sides of the vehicle width of the passing vehicle 42 illustrated in the figure, as a passing width of the passing vehicle 42, and compares the value with a passable width of the road. In this process, the server 100 can calculate the passable width by, for example, obtaining a distance from the obstacle coordinates 41 to the center of the road, subtracting a half of the vehicle width of the parked vehicle from the distance, adding a half of the road width to the resultant value to obtain a gap between the parked vehicle and a road edge, adding the vehicle width of the parked vehicle to the gap, and subtracting the resultant value from the road width. Alternatively, the infrastructure sensor 200 may store road width information in advance, so that the passable width of the road can be detected on the side of the infrastructure sensor 200 by using the value, the position of the obstacle detected, and the vehicle width. As a result, when the passable width of the passing vehicle 42 is equal to or less than the passing width, it is determined that the passing vehicle 42 can pass by the parked vehicle 40. When the passing width is larger than the passable width, the passing vehicle 42 is determined to be incapable of passing by.

In step S107 in Fig. 2, it is determined whether each affected vehicle can pass by the obstacle by the method described above. As a result, when it is determined that the vehicle can pass, the processing proceeds to step S108. When it is determined that the vehicle cannot pass, the processing proceeds to step S110. Note that the processing in and after step S108 is executed for each affected vehicle according to a result of the determination in step S107.

In step S108, the vehicle linkage unit 101 of the server 100 transmits the information about the obstacle point used in the passing ability determination processing in step S107, to the in-vehicle device 300 installed in the affected vehicle. For example, information about the coordinate value of the obstacle and the passable width is transmitted as the information about the obstacle point. The of the vehicle-side server linkage unit 301 of the in-vehicle device 300 receives the information about the obstacle point transmitted from the server 100.

In step S109, the in-vehicle device 300 performs control of causing the host vehicle to pass by the obstacle based on the information about the obstacle point received from the server 100 in step S108. In this process, the in-vehicle device 300 controls the movement status of the host vehicle based on the coordinate value of the obstacle and the information about the passable width included in the information about the obstacle point, so that the host vehicle that has reached the vicinity of the obstacle can appropriately pass by the obstacle. Furthermore, in this process, a screen for notifying the occupant of the host vehicle of the presence of an obstacle may be displayed on the vehicle-side display unit 305. When the vehicle successfully passes through the obstacle point, the sequence in Fig. 2 is terminated.

In step S110, the route designing unit 109 of the server 100 designs the detour route for the affected vehicle. Here, as described above, the map information 110 is used to design a detour route on which the affected vehicle can travel while avoiding the obstacle point.

In step S111, the vehicle linkage unit 101 of the server 100 transmits the information about the detour route designed in step S110 to the in-vehicle device 300 installed in the affected vehicle. Furthermore, in this process, notification information for notifying the occupant of the affected vehicle of a reason why the traveling route of the affected vehicle is changed to the detour route is preferably transmitted together with the detour route information. However, if the affected vehicle obviously has not occupant, the transmission of the notification information may be omitted. The vehicle-side server linkage unit 301 of the in-vehicle device 300 receives the detour route information and the notification information transmitted from the server 100.

In step S112, the in-vehicle device 300 updates the route information about the host vehicle stored in the route management unit 302 based on the detour route information received from the server 100 in step S111. As a result, the current traveling route of the host vehicle is overwritten by the detour route, and the vehicle control unit 308 performs control to cause the host vehicle that is an affected vehicle to travel along the detour route.

In step S113, the vehicle-side display unit 305 of the in-vehicle device 300 display a screen for notifying the occupant of the host vehicle of the reason why the traveling route is changed to the detour route based on the notification information received from the server 100 in step S111. For example, the position of the obstacle and the planned traveling route are displayed on the map, and the fact that the vehicle cannot pass by the obstacle is notified as the reason for changing to the detour route.

In step S114, a management screen of the display unit 111 of the server 100 displays the detour route designed for each affected vehicle in step S110. The management screen is a screen for the administrator of the server 100 to manage the operation of the vehicle assistance system 1 as described above. When a detour route is set due to an obstacle, the detour route is displayed on the management screen.

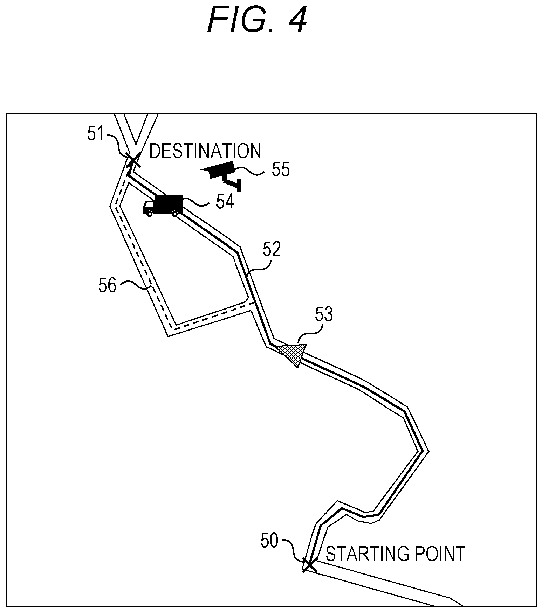

Fig. 4 is a diagram illustrating an example of the management screen displayed on the display unit 111. Fig. 4 illustrates a state where a traveling route 52 is set from a starting point 50 to a destination 51, and an obstacle 54 on the traveling route 52 is detected ahead of a vehicle 53 traveling along the traveling route 52 by an infrastructure sensor 55 installed in the periphery. In this state, when the server 100 determines, in the processing in Fig. 2, that the vehicle 53 cannot pass by the obstacle 54, the server 100 designs a detour route 56 for the vehicle 53 to avoid the obstacle 54. In the management screen illustrated in Fig. 4, the traveling route 52 and the detour route 56 are displayed to be distinguishable from each other, so that the administrator can easily recognize that the detour route 56 has been designed.

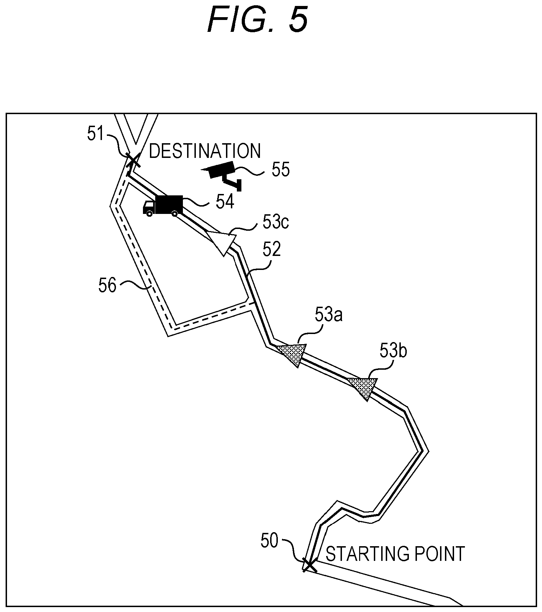

Fig. 5 is a diagram illustrating another example of the management screen displayed on the display unit 111. Fig. 5 illustrates a state where the traveling route 52 is set from the starting point 50 to the destination 51, and the obstacle 54 on the traveling route 52 is detected ahead of three vehicles 53a, 53b, and 53c each traveling along the traveling route 52, by the infrastructure sensor 55 installed in the periphery. In this state, when the server 100 determines, in the processing in Fig. 2, that the vehicles 53a and 53b cannot pass by the obstacle 54, the server 100 designs the detour route 56 for the vehicles 53a and 53b to avoid the obstacle 54. On the other hand, when it is determined that the vehicle 53c can pass by the obstacle 54, the detour route 56 is not designed for the vehicle 53c. In the management screen illustrated Fig. 5, the traveling route 52 and the detour route 56 are displayed in an distinguishable manner, and the vehicles 53a and 53b corresponding to the detour route 56 and the vehicle 53c not corresponding to the route are displayed in different colors so as to be distinguishable with each other, so that the administrator can easily recognize the vehicle for which the detour route 56 has been designed.

According to the first arrangement described above, the following operations and effects are obtained.

(1) The vehicle assistance system 1 includes the server 100 capable of communicating with a plurality of vehicles, the plurality of in-vehicle devices 300 each installed in each of the plurality of vehicles, and the infrastructure sensor 200 that generates sensing information about an obstacle point at which an obstacle exists on a road. The server 100 includes the infrastructure linkage unit 103 that has a function of communicating with the infrastructure sensor 200 and acquires the sensing information from the infrastructure sensor 200, the affected vehicle identification unit 106 that identifies a vehicle that is affected by the obstacle, among a plurality of vehicles, as an affected vehicle, the passing ability determination unit 108 that determines whether the affected vehicle is capable of passing by the obstacle, based on a vehicle width of the affected vehicle and a passable width of the road at the obstacle point based on the sensing information, the route designing unit 109 that designs a detour route on which the affected vehicle travels to avoid the obstacle point, when the passing ability determination unit 108 determines the affected vehicle is not capable of passing, and the vehicle linkage unit 101 that has a function of communicating with a plurality of in-vehicle devices 300 and transmits information about the detour route to the in-vehicle device 300 installed in the affected vehicle among the plurality of in-vehicle devices 300. The infrastructure sensor 200 includes the sensor unit 201 that detects an obstacle and generates sensing information, and the infrastructure-side server linkage unit 202 that transmits the sensing information to the server 100. The in-vehicle device 300 includes the vehicle-side server linkage unit 301 that acquires information about a detour route from the server 100, and the vehicle control unit 308 that causes the host vehicle, which is the affected vehicle, to travel along the detour route based on the information about the detour route acquired by the vehicle-side server linkage unit 301. With this configuration, when an obstacle exists on a road, appropriate assistance can be provided to a vehicle affected by the obstacle.
(2) The vehicle linkage unit 101 transmits information about the obstacle point to the in-vehicle device 300 (step S108) when the passing ability determination unit 108 determines the affected vehicle is capable of passing (step S107: Yes). With this configuration, the in-vehicle device 300 that has received the information can issue a notification in advance that indicates that the vehicle needs to pass by the obstacle.
(3) The passing ability determination unit 108 determines a vehicle control width required for controlling the affected vehicle (step S106), and determines whether the affected vehicle is capable of passing by the obstacle, by comparing the passable width with a value obtained by adding the vehicle control width to the vehicle width (step S107). With this configuration, whether the affected vehicle can pass by the obstacle can be reliably determined, with the vehicle control width required for controlling autonomous driving of the affected vehicle taken into consideration.
(4) The vehicle linkage unit 101 may further transmit information for notifying the occupant of the affected vehicle of a reason why the traveling route of the affected vehicle is changed, to the detour route to the in-vehicle device 300 (step S111). With this configuration, when an occupant is on the affected vehicle, the occupant can be notified of the change to the detour route in advance in a clearly recognizable manner.
(5) The route designing unit 109 designs the detour route with a road provided with the infrastructure sensor 200 prioritized (step S110). With this configuration, even when another obstacle appears while the vehicle is traveling on the detour route, the obstacle can be detected in advance for designing a further detour route.

### Second arrangement as embodiment of the present invention

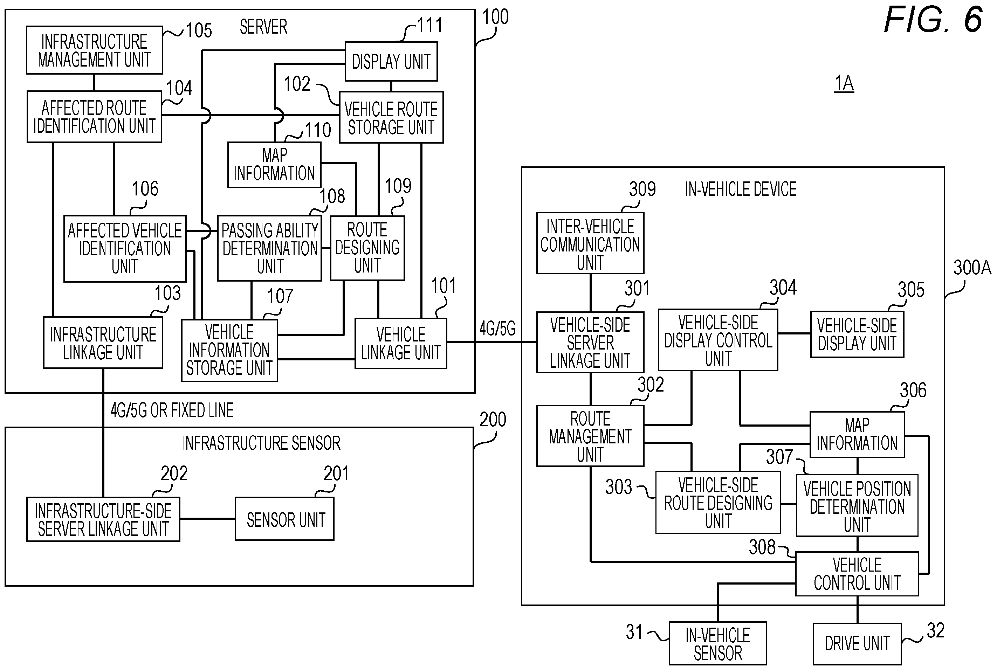

Fig. 6 is a diagram illustrating a configuration of a vehicle assistance system according to a second arrangement . A vehicle assistance system 1A illustrated in Fig. 6 includes the server 100, the infrastructure sensor 200, and an in-vehicle device 300A, and assists a host vehicle in which the in-vehicle device 300A is installed when the vehicle autonomously travels, by autonomous driving, on a traveling trajectory to a designated location, as in the case of the vehicle assistance system 1 described in the first arrangement. The vehicle assistance system 1A according to the present arrangement is different from the vehicle assistance system 1 according to the first arrangement in that the in-vehicle device 300A further includes an inter-vehicle communication unit 309. Hereinafter, the vehicle assistance system 1A according to the present arrangement will be described while focusing on this difference.

The inter-vehicle communication unit 309 performs inter-vehicle communications, through wireless communications, with other vehicles in the periphery of the host vehicle (for example, other vehicles traveling behind the host vehicle). With the inter-vehicle communications performed by the inter-vehicle communication unit 309, for example, information about an obstacle point or information about a detour route received by a certain vehicle from the server 100 can be transferred to another vehicle. With this configuration, the server 100 can distribute the information about the obstacle point and the information about the detour route to all the affected vehicle by communicating only with the in-vehicle device 300A installed in some of the affected vehicles.

When using the inter-vehicle communications to transmit the information about the obstacle point and the information about the detour route from one vehicle (first vehicle) to another vehicle (second vehicle), the vehicle linkage unit 101 of the server 100 transmits these pieces of information to the in-vehicle device 300A of the first vehicle together with a predetermined command. This command is a command for causing the inter-vehicle communication unit 309 to transmit the information about the obstacle point and the information about the detour route to other vehicles by using its inter-vehicle communication function. The in-vehicle device 300A of the first vehicle that has received the command causes the inter-vehicle communication unit 309 to transmit the information about the obstacle point and the information about the detour route received, to other vehicles through the inter-vehicle communications, in response to the command.

According to the second arrangement described above, the in-vehicle device 300A includes the inter-vehicle communication unit 309 that implements the inter-vehicle communication function for communicating with other vehicles. The vehicle linkage unit 101 further transmits, to the in-vehicle device 300A, the command for causing the inter-vehicle communication unit 309 to transmit the information about the detour route to another vehicle. The in-vehicle device 300A causes the inter-vehicle communication unit 309 to transmit the information about the detour route to the in-vehicle device 300A installed in another vehicle, in response to the command. With this configuration, even if an affected vehicle that cannot pass by an obstacle is in an area where the communications with the server 100 are disabled, or the computing capacity of the server 100 is insufficient, the information about the detour route can be transmitted from the server 100 to the affected vehicle.

In each of the arrangements described above, it is assumed that no particular processing is executed after each affected vehicle has passed by the obstacle or has avoided the obstacle by traveling on the detour route. However, a result of avoiding the obstacle may be fed back from the in-vehicle device 300, 300A to the server 100, for improving the passing ability determination processing by the server 100 thereafter. For example, the in-vehicle device 300, 300A may feed back, to the server 100, information such as: whether or not the affected vehicle actually succeeded in passing by the obstacle; if succeeded, a distance indicating how much extra space there was with respect to the obstacle or the edge of the road; an action taken when the vehicle was incapable of passing; and whether the detour route was appropriate when the vehicle traveled on the detour route. The information fed back is reflected on the vehicle information stored and managed in the vehicle information storage unit 107 in the server 100, to be reflected on the passing ability determination processing executed by the passing ability determination unit 108, whereby the accuracy of the passing ability determination processing is improved.

Furthermore, in each of the arrangements described above, an example is described in which the passing ability determination unit 108 determines whether each affected vehicle can pass based on comparison between the passing width of each affected vehicle and the passable width of the road as in the determination method described with reference to Fig. 3. It should be noted that other conditions may be further added for the determination. For example, whether or not each affected vehicle can pass can be determined while taking a height restriction, a traffic congestion state, a road surface condition, and the like, in the vicinity of the obstacle point into consideration. With this configuration, for example, when there is snow piled up high on the side of the road, whether each affected vehicle can pass is determined under the condition that the vehicle cannot pass through the snow covered portion. In this manner, whether each affected vehicle can pass can be even more accurately determined, with the actual condition of the obstacle point reflected on the determination.

In each of the arrangements described above, an example is described in which each vehicle in which the in-vehicle device 300 or 300A is installed autonomously moves, by autonomous driving, along a traveling route to a designated location. However, the present invention is not limited to this. Specifically, the present invention is not limited to an autonomous driving vehicle, and can also be applied to a normal vehicle in which a driver performs a driving operation. When the present invention is applied to a normal vehicle, displaying of a map showing the traveling route and the detour route set on the vehicle-side display unit 305 and the like are preferably performed to notify the driver of the routes. Furthermore, when the present invention is applied to a normal vehicle, the passing ability determination unit 108 preferably determines whether the vehicle can pass by the obstacle by using a distance (clearance) between the vehicle and the obstacle generally required for the driver to perform the driving operation, instead of using the vehicle control width.

The arrangements and modifications described above are merely examples, and the present invention is not limited to the contents of these, as long as the features of the invention are not compromised. Moreover, although various arrangements and modifications are described above, the present invention is not limited to the contents of these.

## Claims

1. A server (100) comprising:
an infrastructure linkage unit (103) that has a function of communicating with an infrastructure sensor (200) which is installed in the vicinity of a road that generates sensing information about an obstacle point at which an obstacle exists on a road, the infrastructure linkage unit (103) acquiring the sensing information from the infrastructure sensor (200);
an affected vehicle identification unit (106) that identifies a vehicle that is affected by the obstacle, among a plurality of vehicles, as an affected vehicle;
a passing ability determination unit (108) that determines whether the affected vehicle is capable of passing by the obstacle, based on a vehicle width of the affected vehicle and a passable width of the road at the obstacle point based on the sensing information;
a route designing unit (109) that designs a detour route on which the affected vehicle travels to avoid the obstacle point, when the passing ability determination unit (108) determines the affected vehicle is not capable of passing; and
a vehicle linkage unit (101) that has a function of communicating with an in-vehicle device installed in the affected vehicle, the vehicle linkage unit (101) transmitting information about the detour route to the in-vehicle device,
wherein the vehicle linkage unit (101) further transmits to the in-vehicle device, a command causing transmission of the information about the detour route to the other vehicle by using an inter-vehicle communication function which is adapted to communicate with another vehicle, which inter-vehicle communication function is provided in the in-vehicle device to communicate with another vehicle, wherein the passing ability determination unit (108) determines a vehicle control width required for controlling the affected vehicle, and determines whether the affected vehicle is capable of passing by the obstacle, by comparing the passable width with a value obtained by adding the vehicle control width to the vehicle width,
wherein the route designing unit (109) designs the detour route with a road provided with the infrastructure sensor prioritized.

2. The server according to claim 1, wherein the vehicle linkage unit (101) is adapted to transmit information about the obstacle point to the in-vehicle device when the passing ability determination unit (108) determines the affected vehicle is capable of passing.

3. The server according to claim 1, wherein the vehicle linkage unit (101) further transmits, to the in-vehicle device, information for notifying an occupant of the affected vehicle of a reason for changing a traveling route of the affected vehicle to the detour route.

4. A vehicle assistance system comprising:
a server according to any of claims 1 to 3, which is capable of communicating with a plurality of vehicles;
a plurality of in-vehicle devices (300) each installed in each of the plurality of vehicles; and
the infrastructure sensor (200) which is installed in the vicinity of a road , wherein
the infrastructure sensor (200) includes:
a sensor unit (201) that generates the sensing information upon detecting the obstacle; and
an infrastructure-side server linkage unit (202) that transmits the sensing information to the server, and
wherein the in-vehicle devices (300) each include:
a vehicle-side server linkage unit (301) that acquires the information about the detour route from the server; and
a vehicle control unit (308) that causes the affected vehicle to travel along the detour route based on the information about the detour route acquired by the vehicle-side server linkage unit.

## Patentansprüche

1. Server (100), umfassend:
eine Infrastrukturverbindungseinheit (103), die eine Funktion zum Kommunizieren mit einem Infrastruktursensor (200) aufweist, der in der Nähe einer Straße installiert ist, die Erfassungsinformationen über einen Hindernispunkt erzeugt, an dem ein Hindernis auf einer Straße vorhanden ist, wobei die Infrastrukturverbindungseinheit (103) die Erfassungsinformationen von dem Infrastruktursensor (200) erfasst;
eine Identifikationseinheit (106) für ein betroffenes Fahrzeug, die ein Fahrzeug, das von dem Hindernis betroffen ist, unter einer Vielzahl von Fahrzeugen als ein betroffenes Fahrzeug identifiziert;
eine Passierbarkeitsbestimmungseinheit (108), die basierend auf einer Fahrzeugbreite des betroffenen Fahrzeugs und einer passierbaren Breite der Straße an dem Hindernispunkt basierend auf den Erfassungsinformationen bestimmt, ob das betroffene Fahrzeug in der Lage ist, das Hindernis zu passieren;
eine Routengestaltungseinheit (109), die eine Umleitungsroute gestaltet, auf der das betroffene Fahrzeug fährt, um den Hindernispunkt zu umgehen, wenn die Passierbarkeitsbestimmungseinheit (108) bestimmt, dass das betroffene Fahrzeug nicht in der Lage ist, zu passieren; und
eine Fahrzeugverbindungseinheit (101), die eine Funktion zum Kommunizieren mit einer fahrzeuginternen Vorrichtung aufweist, die in dem betroffenen Fahrzeug installiert ist, wobei die Fahrzeugverbindungseinheit (101) Informationen über die Umleitungsroute an die fahrzeuginterne Vorrichtung überträgt,
wobei die Fahrzeugverbindungseinheit (101) ferner an die fahrzeuginterne Vorrichtung einen Befehl überträgt, der eine Übertragung der Informationen über die Umleitungsroute an das andere Fahrzeug unter Verwendung einer Zwischenfahrzeugkommunikationsfunktion bewirkt, die dazu ausgelegt ist, mit einem anderen Fahrzeug zu kommunizieren, wobei die Zwischenfahrzeugkommunikationsfunktion in der fahrzeuginternen Vorrichtung bereitgestellt ist, um mit einem anderen Fahrzeug zu kommunizieren, wobei die Passierbarkeitsbestimmungseinheit (108) eine Fahrzeugsteuerbreite bestimmt, die zum Steuern des betroffenen Fahrzeugs erforderlich ist, und bestimmt, ob das betroffene Fahrzeug in der Lage ist, das Hindernis zu passieren, indem die passierbare Breite mit einem Wert verglichen wird, der durch Addieren der Fahrzeugsteuerbreite zu der Fahrzeugbreite erhalten wird,
wobei die Routengestaltungseinheit (109) die Umleitungsroute mit einer Straße, die mit dem Infrastruktursensor bereitgestellt ist, priorisiert gestaltet.

2. Server nach Anspruch 1, wobei die Fahrzeugverbindungseinheit (101) dazu ausgelegt ist, Informationen über den Hindernispunkt an die fahrzeuginterne Vorrichtung zu übertragen, wenn die Passierbarkeitsbestimmungseinheit (108) bestimmt, dass das betroffene Fahrzeug in der Lage ist, zu passieren.

3. Server nach Anspruch 1, wobei die Fahrzeugverbindungseinheit (101) ferner an die fahrzeuginterne Vorrichtung Informationen zum Benachrichtigen eines Insassen des betroffenen Fahrzeugs über einen Grund zum Ändern einer Fahrtroute des betroffenen Fahrzeugs zu der Umleitungsroute überträgt.

4. Fahrzeugassistenzsystem, umfassend:
einen Server nach einem der Ansprüche 1 bis 3, der in der Lage ist, mit einer Vielzahl von Fahrzeugen zu kommunizieren;
eine Vielzahl von fahrzeuginternen Vorrichtungen (300), die jeweils in jedem der Vielzahl von Fahrzeugen installiert sind; und
den Infrastruktursensor (200), der in der Nähe einer Straße installiert ist, wobei
der Infrastruktursensor (200) umfasst:
eine Sensoreinheit (201), die die Erfassungsinformationen beim Erfassen des Hindernisses erzeugt; und
eine infrastrukturseitige Serververbindungseinheit (202), die die Erfassungsinformationen an den Server überträgt, und
wobei die fahrzeuginternen Vorrichtungen (300) jeweils umfassen:
eine fahrzeugseitige Serververbindungseinheit (301), die die Informationen über die Umleitungsroute von dem Server erfasst; und
eine Fahrzeugsteuereinheit (308), die das betroffene Fahrzeug veranlasst, basierend auf den Informationen über die Umleitungsroute, die von der fahrzeugseitigen Serververbindungseinheit erfasst werden, entlang der Umleitungsroute zu fahren.

## Revendications

1. Serveur (100) comprenant :
une unité de liaison d'infrastructure (103) qui a une fonction de communication avec un capteur d'infrastructure (200) qui est installé au voisinage d'une route qui génère des informations de détection concernant un point d'obstacle auquel un obstacle existe sur une route, l'unité de liaison d'infrastructure (103) acquérant les informations de détection à partir du capteur d'infrastructure (200) ;
une unité d'identification de véhicule affecté (106) qui identifie un véhicule qui est affecté par l'obstacle, parmi une pluralité de véhicules, en tant que véhicule affecté ;
une unité de détermination de capacité de passage (108) qui détermine si le véhicule affecté est capable de passer par l'obstacle, sur la base d'une largeur de véhicule du véhicule affecté et d'une largeur de passage de la route au point d'obstacle sur la base des informations de détection ;
une unité de conception d'itinéraire (109) qui conçue un itinéraire de détour sur lequel le véhicule affecté se déplace pour éviter le point d'obstacle, lorsque l'unité de détermination de capacité de passage (108) détermine que le véhicule affecté n'est pas capable de passer ; et
une unité de liaison de véhicule (101) qui a une fonction de communication avec un dispositif embarqué installé dans le véhicule affecté, l'unité de liaison de véhicule (101) transmettant des informations concernant l'itinéraire de détour au dispositif embarqué,
dans lequel l'unité de liaison de véhicule (101) transmet en outre au dispositif embarqué, une commande provoquant la transmission des informations concernant l'itinéraire de détour à l'autre véhicule en utilisant une fonction de communication entre véhicules qui est adaptée pour communiquer avec un autre véhicule, laquelle fonction de communication entre véhicules est prévue dans le dispositif embarqué pour communiquer avec un autre véhicule, dans lequel l'unité de détermination de capacité de passage (108) détermine une largeur de commande de véhicule requise pour commander le véhicule affecté, et détermine si le véhicule affecté est capable de passer par l'obstacle, en comparant la largeur de passage à une valeur obtenue en ajoutant la largeur de commande de véhicule à la largeur de véhicule,
dans lequel l'unité de conception d'itinéraire (109) conçu l'itinéraire de détour avec une route prévue avec le capteur d'infrastructure priorisé.

2. Serveur selon la revendication 1, dans lequel l'unité de liaison de véhicule (101) est adaptée pour transmettre des informations concernant le point d'obstacle au dispositif embarqué lorsque l'unité de détermination de capacité de passage (108) détermine que le véhicule affecté est capable de passer.

3. Serveur selon la revendication 1, dans lequel l'unité de liaison de véhicule (101) transmet en outre, au dispositif embarqué, des informations pour notifier à un occupant du véhicule affecté une raison pour changer un itinéraire de déplacement du véhicule affecté en l'itinéraire de détour.

4. Système d'assistance de véhicule comprenant :
un serveur selon l'une quelconque des revendications 1 à 3, qui est capable de communiquer avec une pluralité de véhicules ;
une pluralité de dispositifs embarqués (300) installés chacun dans chacun de la pluralité de véhicules ; et
le capteur d'infrastructure (200) qui est installé au voisinage d'une route, dans lequel
le capteur d'infrastructure (200) inclut :
une unité de capteur (201) qui génère les informations de détection lors de la détection de l'obstacle ; et
une unité de liaison de serveur côté infrastructure (202) qui transmet les informations de détection au serveur, et
dans lequel les dispositifs embarqués (300) incluent chacun :
une unité de liaison de serveur côté véhicule (301) qui acquiert les informations concernant l'itinéraire de détour à partir du serveur ; et
une unité de commande de véhicule (308) qui amène le véhicule affecté à se déplacer le long de l'itinéraire de détour sur la base des informations concernant l'itinéraire de détour acquises par l'unité de liaison de serveur côté véhicule.
